# EUROPÄISCHE PATENTSCHRIFT

(11) **EP 2 865 255 B1**
(45) Veröffentlichungstag und Bekanntmachung des Hinweises auf die Patenterteilung: **28.03.2018**
(21) Anmeldenummer: 14189854.4
(22) Anmeldetag: 22.10.2014
(51) Int. Cl.: A01B 73/06

(54) **Landwirtschaftliche Maschine**
Agricultural machine
Machine agricole

(30) Priorität: 24.10.2013 DE 102013221606
(43) Veröffentlichungstag der Anmeldung: 29.04.2015
(73) Patentinhaber: Deere & Company, Moline, IL 61265 (US)
(72) Erfinder: Olivares, Marco Antonio, 66210 Garza Garcia (MX)
(74) Vertreter: Dehnhardt, Florian Christopher

(56) Entgegenhaltungen:
- EP-A1- 0 836 043
- US-A1- 2009 229 501

## Beschreibung

Die Erfindung betrifft eine landwirtschaftliche Maschine, mit einem ersten Rahmenteil und einem gegenüber dem ersten Rahmenteil um eine vertikale Achse verschwenkbar angeordneten zweiten Rahmenteil, mit wenigstens einer ersten Versorgungsleitung, die sich entlang des ersten Rahmenteils erstreckt, und wenigstens einer zweiten Versorgungsleitung, die sich entlang des zweiten Rahmenteils erstreckt, wobei eine Verbindungseinrichtung vorgesehen ist, mittels welcher die wenigstens erste und wenigstens zweite Versorgungsleitung miteinander verbunden sind. US-A-2009/0229501 beschreibt eine solche landwirtschaftliche Maschine. Es sind landwirtschaftliche Maschinen bekannt, insbesondere Sämaschinen oder Bodenbearbeitungsgeräte, die über eine Rahmenkonstruktion verfügen, bei der ein erster Rahmenteil vorgesehen ist, an welchem ein zweiter Rahmenteil axial verschwenkbar gelagert ist. Der erste Rahmenteil kann dabei einen Transportrahmen umfassen, wobei der zweite Rahmenteil einen Trägerrahmen umfasst. An dem Trägerrahmen können Säeinheiten, Pflanzeinheiten, Bodenbearbeitungsgeräte etc. angebaut sein. Die landwirtschaftliche Maschine weist in einer Betriebsstellung, in der sich der Trägerrahmen quer zum Transportrahmen erstreckt, eine Breite auf, die eine zugelassene Transportbreite überragt und muss für den Transport auf der Straße in eine entsprechende Transportstellung gebracht werden. Dazu kann der Trägerrahmen zunächst vertikal angehoben und dann um 90° um eine vertikale Achse gegenüber dem Transportrahmen verschwenkt werden, wobei sich die Breite der landwirtschaftlichen Maschine um ein Vielfaches reduziert. Am Transportrahmen und am Trägerrahmen erstrecken sich Versorgungsleitungen, beispielsweise Hydraulik- und/oder Pneumatikschläuche, die eine hydraulische oder pneumatische Versorgung für die am Trägerrahmen angeordneten Einheiten bzw.

Geräte oder Aktuatoren sicherstellen. Üblicherweise werden Schlauchenden der Versorgungsschläuche transportrahmenseitig und trägerrahmenseitig an einer Verbindungseinrichtung, die zum einen eine Schnittstelle zu Wartungszwecken darstellt und zum anderen zur Befestigung und Halterung der Versorgungsleitungen dient, zusammengeführt. Beim Anheben und Verschwenken der Rahmenteile aus der Transportstellung in die Betriebsstellung und umgekehrt werden die Versorgungsleitungen im Bereich der Verbindungseinrichtung, entsprechend verdreht und gebogen und damit sowohl radial als auch axial beansprucht. Insbesondere kann dies zu einem Verwinden der Versorgungsschläuche führen, also einem Verdrehen der Versorgungsschläuche um ihre Längsachse. Ein derartiges Verwinden kann die Lebensdauer der Versorgungsschläuche nachhaltig reduzieren und sollte vermieden werden. Es sind Maßnahmen bekannt, die den Einsatz von drehbaren Schlauchverbindern vorsehen, so dass Schlauchenden von Verbindungsleitungen am Transportrahmen sowie Schlauchenden von Verbindungsleitungen am Trägerrahmen drehbar an einer Verbindungseinrichtung befestigt sind. Derartige drehbare Schlauchverbinder sind jedoch kostspielig. Insbesondere bei einer hohen Anzahl von hydraulischen Versorgungsleitungen an der landwirtschaftlichen Maschine kann dies erhebliche Auswirkungen auf die Gesamtherstellungskosten haben.

Die der Erfindung zugrunde liegende Aufgabe wird darin gesehen, eine landwirtschaftliche Maschine der eingangs genannten Art anzugeben, durch welches die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß umfasst eine landwirtschaftliche Maschine der eingangs genannten Art eine Verbindungseinrichtung mit einer Halterung, an der wenigstes eine starre Schlauchverbindung zur Verbindung der ersten und zweiten Versorgungsleitung angeordnet ist, wobei die Schlauchverbindung zwei axial zueinander ausgerichtete Verbindungsenden umfasst zwischen denen eine Lagerscheibe eingespannt ist, wobei die Lagerscheibe in ihrer Umfangsrichtung verdrehbar an der Halterung gelagert ist. Bei den Versorgungsleitungen kann es sich um hydraulische und/oder pneumatische und/oder gasbefüllte Versorgungsleitungen handeln. Durch das Einspannen einer Lagerscheibe zwischen den Enden einer kostengünstigen starren Schlauchverbindung und die drehbare Lagerung der Lagerscheibe an einer Halterung kann eine kostengünstige und einfache Bauweise einer Verbindungseinrichtung für beispielsweise hydraulische Versorgungsschläuche geschaffen werden, mit der ein Verwinden der Verbindungsleitungen effektiv verhindert oder zumindest reduziert werden kann.

Die Halterung kann eine sich radial zur Lagerscheibe erstreckende Platte umfassen wobei die Verbindungsenden der Schlauchverbindung sich jeweils senkrecht zu einer Seite der Platte erstrecken und wobei die Lagerscheibe in einer in der Platte ausgebildeten Bohrung spielbehaftet eingefasst ist. Insbesondere die Lagerung der Lagerscheibe in der Bohrung einer Platte oder dergleichen stellt eine kostengünstige und einfach zusammenbaubare Variante dar und vermeidet gänzlich die Verwendung von drehbaren Schlauchverbindern.

Die Lagerscheibe kann auf einfache Weise durch beidseitig der Platte angeordnete Haltescheiben, die einen Durchmesser der Bohrung radial überspannen, eingefasst sein, wobei die Lagerscheibe zwischen den Haltescheiben eingespannt ist. Sowohl die Lagerscheibe als auch die Haltescheiben sind kreisrund ausgebildet und können spielbehaftet in der Bohrung eingefasst sein, so dass ein Verdrehen der Lagerscheibe und damit auch ein Verdrehen der Schlauchenden der Versorgungsleitungen in Umfangsrichtung ermöglicht wird. Die Haltescheiben spannen die Lagerscheibe ein und überspannen den Durchmesser der Bohrung derart, dass die Lagerscheibe axial gesichert an der Platte gehalten wird. Dabei ist die Lagerscheibe geringfügig dicker ausgebildet als die Platte, wodurch ein gewisses axiales Spiel zwischen Haltescheiben und Platte geschaffen wird.

An der Schlauchverbindung kann zwischen den Verbindungsenden ein Absatz und ein Gewinde ausgebildet sein, wobei die Haltescheiben und die Lagerscheibe zwischen einer einfachen auf dem Gewinde geführten Gewindemutter und dem Absatz eingespannt werden. Hierdurch wird eine besonders einfache Montage der Verbindungsleitungen an die Halterung geschaffen.

An der Platte können mehrere nebeneinander angeordnete Bohrungen ausgebildet sein, in denen jeweils eine Schlauchverbindung mittels einer in der jeweiligen Bohrung eingefassten Lagerscheibe angeordnet ist. Damit können eine Vielzahl von Schlauchverbindungen drehbar an der Platte bzw. an der Halterung einer gemeinsamen Verbindungseinrichtung befestigt werden.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Draufsicht einer Sämaschine in einer Transportstellung,
- Fig. 2: eine schematische Seitenansicht der Sämaschine aus Figur 1 in der Transportstellung,
- Fig. 3: eine schematische Draufsicht der Sämaschine aus Figur 1 in einer Betriebsstellung,
- Fig. 4: eine schematische perspektivische Ansicht eines ersten Rahmenteils der Sämaschine aus Figur 1,
- Fig. 5: eine vergrößerte schematische perspektivische Ansicht einer Platte einer an dem ersten Rahmenteil ausgebildeten Halterung und
- Fig. 6: eine vergrößerte schematische Seitenansicht einer in der Platte gemäß Figur 5 angeordneten Schlauchverbindung.

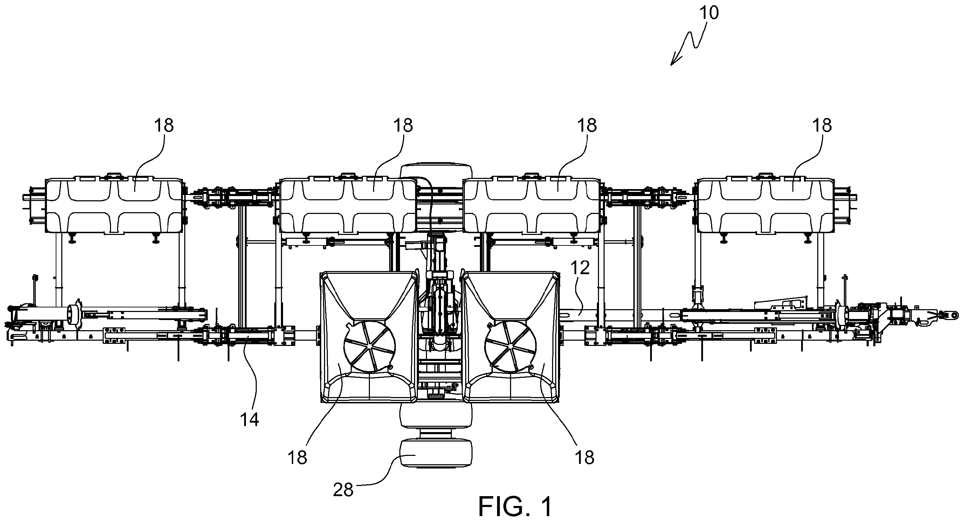

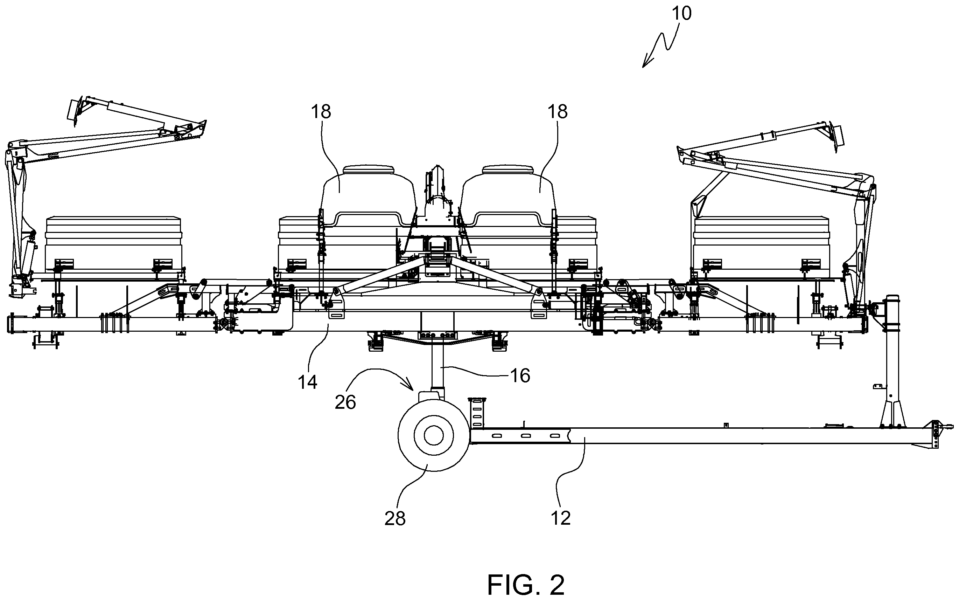

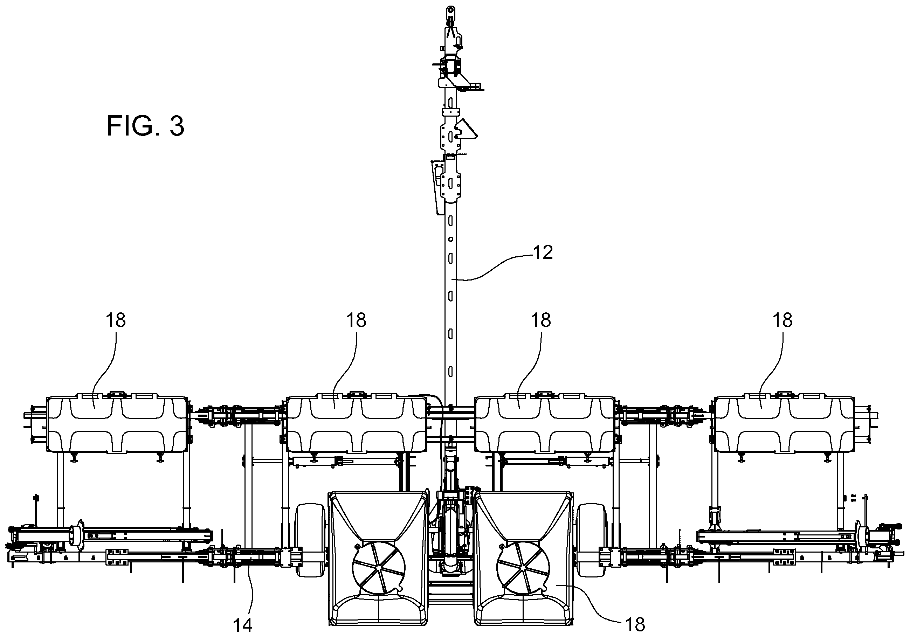

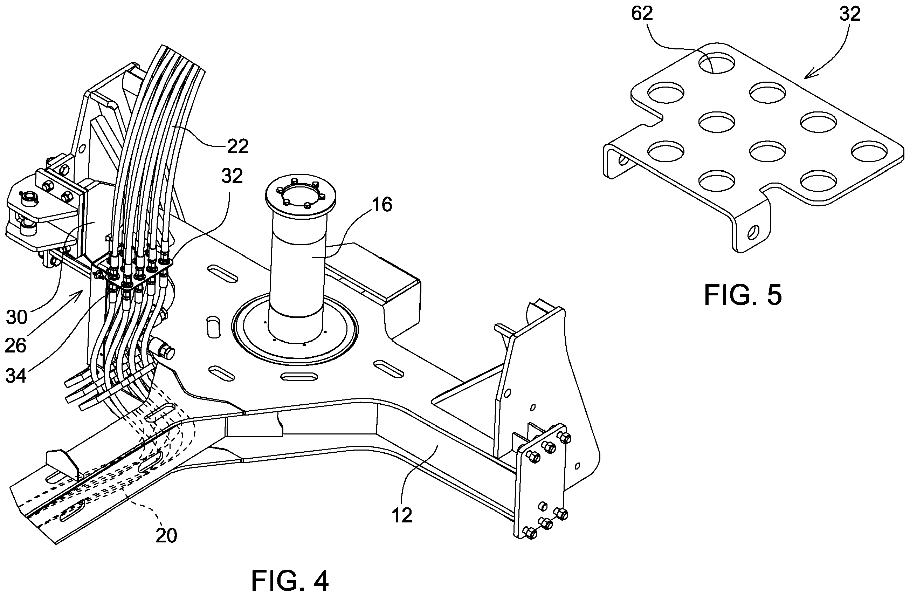

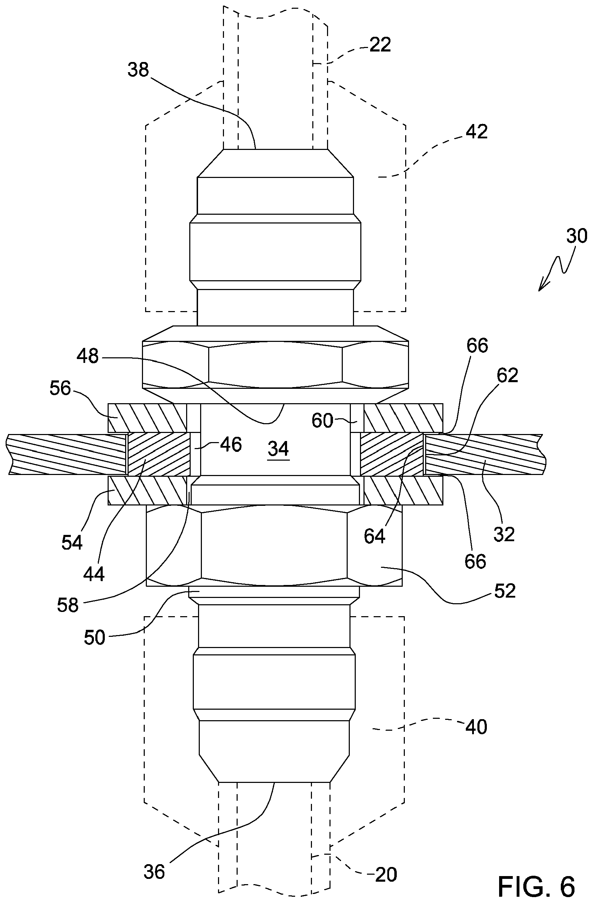

In den Figuren 1 bis 3 ist eine landwirtschaftliche Maschine 10 in Form einer Sämaschine dargestellt. Die Sämaschine umfasst einen ersten Rahmenteil 12 und einen zweiten Rahmenteil 14. Der erste Rahmenteil 12 ist als Transportrahmen und der zweite Rahmenteil 14 als Trägerrahmen ausgebildet. Der zweite Rahmenteil 14 ist schwenkbar um eine am ersten Rahmenteil 12 angeordnete vertikale Achse 16 gelagert, wobei der zweite Rahmenteil 14 zugleich in Achsrichtung der Achse 16 höhenverstellbar montiert ist. Auf diese Weise kann der an dem Transportrahmen 12 gelagerte Trägerrahmen von einer Transportstellung (gemäß Figur 1 und Figur 2) in eine Betriebsstellung (gemäß Figur 3) verschwenkt und abgesenkt werden. Auf dem Trägerrahmen sind Reihensäeinheiten (nicht gezeigt) montiert, die in Verbindung mit Saatgut- und/oder Düngertanks 18 stehen. Zur hydraulischen Versorgung der Sämaschine, insbesondere zur Betätigung von Hydraulikzylindern (nicht gezeigt) am Trägerrahmen, sind am Transportrahmen erste hydraulische Versorgungsleitungen 20 und am Trägerrahmen zweite hydraulische Versorgungsleitungen 22 angeordnet. Die ersten hydraulischen Versorgungsleitungen 20 sind an eine an einem Zugfahrzeug (nicht gezeigt), beispielsweise einem landwirtschaftlichen Schlepper, angeordnete Hydraulikquelle anschließbar. Die ersten hydraulischen Versorgungsleitungen 20 erstrecken sich ausgehend von einer Kupplungseinrichtung 24 am Transportrahmen 12 der landwirtschaftlichen Maschine 10 bis hin zu einer am Transportrahmen 12 angeordneten Verbindungseinrichtung 26. Die zweiten hydraulischen Versorgungsleitungen 22 erstrecken sich ausgehend von der Verbindungseinrichtung 26 entlang des Trägerrahmens 14 zu den jeweiligen hydraulischen Verbrauchern, insbesondere den Hydraulikzylindern (nicht gezeigt). Die Verbindungseinrichtung 26 ist vorzugsweise am Transportrahmen angeordnet. Es ist jedoch auch möglich, diese am Trägerrahmen anzuordnen. Der Transportrahmen 12 stützt sich mittels Räder 28 vom Boden ab. Die Verbindungseinrichtung 26 umfasst eine Halterung 30 (Figur 4) mit einer Platte 32 (Figuren 5 und 6). An der Halterung 30 sind mehrere in sich starre Schlauchverbindungen 34 montiert, die zur Verbindung der ersten und zweiten hydraulischen Versorgungsleitungen 20, 22 dienen. Die Schlauchverbindungen 34 weisen jeweils zwei gegenüber angeordnete und axial zueinander ausgerichtete Verbindungsenden 36, 38 auf, an denen Verbindungsbuchsen 40, 42 der hydraulischen Versorgungsleitungen 20, 22 aufgesteckt sind, wobei die Schlauchverbindungen 34 parallel zur Achse 16 ausgerichtet montiert sind.

Zwischen den Verbindungsenden 36, 38 einer jeden Schlauchverbindung 34 ist eine Lagerscheibe 44 eingespannt. Die Lagerscheibe 44 ist als kreisrunde Scheibe ausgebildet, mit einer zentrisch ausgebildeten Durchgangsöffnung 46, durch welche sich die Schlauchverbindung 34 erstreckt (siehe Figur 6). Zum Einspannen der Lagerscheibe 44 ist an der Schlauchverbindung 34 zwischen den Verbindungsenden einerseits der Lagerscheibe 44 ein Absatz 48 und andererseits der Lagerscheibe 44 ein Gewinde 50 ausgebildet, auf dem eine Gewindemutter 52 geführt ist. Ferner sind beidseitig der Lagerscheibe 44 jeweils eine Haltescheibe 54, 56 angeordnet, die jeweils als kreisrunde Scheibe ausgebildet ist, und ebenfalls mit einer zentrisch ausgebildeten Durchgangsöffnung 58 bzw. 60 versehen ist, durch welche sich die Schlauchverbindung 34 erstreckt. Wie der Figur 6 zu entnehmen ist, ist die Lagerscheibe 44 zwischen den Haltescheiben 54 und 56 eingefasst und die Haltescheiben 54, 56 sind zwischen dem Absatz 48 und der Gewindemutter 52 eingespannt, wobei eine Haltescheibe 54 an dem Absatz 48 und die andere Haltescheibe 56 an der Gewindemutter 52 zu Anlage kommt. Die Außendurchmesser der Haltescheiben 54, 56 sind derart bemessen, dass sie jeweils den Außendurchmesser der Lagerscheibe 44 überragen.

Die Platte 32 ist mit mehreren Bohrungen 62 versehen, an denen jeweils eine der Schlauchverbindungen 34 montiert ist, wobei die Bohrungen 62 als Durchgangsbohrungen ausgebildet sind. Eine der Bohrungen 62 sowie eine entsprechende Montage einer Schlauchverbindung 34 ist exemplarisch detailliert in Figur 6 dargestellt. Die Platte 32 ist derart angeordnet, dass die Verbindungsenden 36, 38 der Schlauchverbindung 34 sich jeweils senkrecht zu einer Seite der Platte 32 erstrecken, wobei eine Lagerscheibe 44 in ihrer jeweiligen in der Platte 32 ausgebildeten Bohrung 62 spielbehaftet eingefasst ist. Dazu ist die Dicke der Lagerscheibe 44 größer ausgebildet als die Dicke der Platte 32 und der Durchmesser der Lagerscheibe 44 geringer als der Durchmesser der Bohrung 32. Zudem sind die Durchmesser der Haltescheiben 54, 56 größer gewählt als der Durchmesser der Bohrung 32, so dass die Haltescheiben 54, 56 zum einen die Lagerscheibe 44 und zum anderen auch die Bohrung 62 der Platte 32 überragen. Damit ergibt sich eine spielbehaftete Einfassung der Lagerscheibe 44, wobei zwischen einem Rand der Bohrung 62 und einem Rand der Lagerscheibe 44 eine radialer Bewegungsspalt 64 und zwischen den Haltescheiben 54, 56 und der Platte 32 jeweils ein axialer Bewegungsspalt 66 ausgebildet ist. Damit ist die Lagerscheibe 44 in ihrer Umfangsrichtung verdrehbar an der Halterung 30 gelagert, wobei sich die Platte 32 wie dargestellt radial zur Lagerscheibe 44 erstreckt und eine Bewegungsfreiheit der Schlauchverbindung 34 in Axialrichtung durch die Haltescheiben 54, 56 und in Radialrichtung durch die Bohrung 62 beschränkt wird.

Mit der oben ausgeführten Verbindungseinrichtung 26 für hydraulische Versorgungsleitungen 20, 22 wird mit einfachen Mitteln ermöglicht, dass durch Verwendung konventioneller starrer Schlauchverbindungen 34 eine gewisse Drehverbindung für die hydraulischen Versorgungsleitungen 20, 22 bereitgestellt wird, ohne auf die herkömmlichen drehbaren Schlauchverbinder zurückgreifen zu müssen. Wie in Figur 5 exemplarisch dargestellt ist, wird in dem obigen Ausführungsbeispiel eine Halterung mit zehn in der Platte 32 ausgebildeten Bohrungen 62 zur Montage von zehn starren Schlauchverbindungen 34 bzw. zur Verbindung von zehn hydraulischen Versorgungsleitungen 20 am ersten Rahmenteil 12 mit zehn hydraulischen Versorgungsleitungen 22 am zweiten Rahmenteil 14 vorgeschlagen. Dies kann selbstverständlich variieren und ist beliebig auf eine höhere oder niedrigere Anzahl veränderbar. Durch die spielbehaftete Lagerung der Lagerplatten 44 und damit der Schlauchverbindungen 34 wird eine radiale Bewegungsfreiheit der hydraulischen Versorgungsleitungen 20, 22 derart verbessert bzw. erweitert, dass ein Verwinden der hydraulischen Leitungen 20, 22 beim Verschwenken des ersten Rahmenteils 12 (Transportrahmen) gegenüber dem zweiten Rahmenteil 14 (Trägerrahmen) aus einer Transportstellung in eine Betriebsstellung vermieden wird. Dadurch wird die Beanspruchung der hydraulischen Versorgungsleitungen 20, 22 hinsichtlich Torsion (Verdrehen) deutlich reduziert und die Lebensdauer erhöht.
Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung wie in den Ansprüchen beansprucht, fallen. So kann beispielsweise eine analoge Verbindungseinrichtung 26 auch für pneumatische oder andere mit einem Fluid oder Gas befüllte Versorgungsleitungen vorgesehen sein.

## Patentansprüche

1. Landwirtschaftliche Maschine (10), mit einem ersten Rahmenteil (12) und einem gegenüber dem ersten Rahmenteil (12) um eine vertikale Achse (16) verschwenkbar angeordneten zweiten Rahmenteil (14), mit wenigstens einer ersten Versorgungsleitung (20), die sich entlang des ersten Rahmenteils (12) erstreckt, und wenigstens einer zweiten Versorgungsleitung (22), die sich entlang des zweiten Rahmenteils (14) erstreckt, wobei eine Verbindungseinrichtung (26) vorgesehen ist, mittels welcher die wenigstens erste und wenigstens zweite Versorgungsleitung (20, 22) miteinander verbunden sind, **dadurch gekennzeichnet, dass** die Verbindungseinrichtung (26) eine Halterung (30) umfasst, an der wenigstes eine starre Schlauchverbindung (34) zur Verbindung der ersten und zweiten Versorgungsleitung (20, 22) angeordnet ist, wobei die Schlauchverbindung (34) zwei axial zueinander ausgerichtete Verbindungsenden (36, 38) umfasst zwischen denen eine Lagerscheibe (44) eingespannt ist, wobei die Lagerscheibe (44) in ihrer Umfangsrichtung verdrehbar an der Halterung (30) gelagert ist.

2. Landwirtschaftliche Maschine (10) nach Anspruch 1,
**dadurch gekennzeichnet, dass** die Halterung (30) eine sich radial zur Lagerscheibe (44) erstreckende Platte (32) umfasst und die Verbindungsenden (36, 38) der Schlauchverbindung (34) sich jeweils senkrecht zu einer Seite der Platte (32) erstrecken, wobei die Lagerscheibe (44) in einer in der Platte ausgebildeten Bohrung (62) spielbehaftet eingefasst ist.

3. Landwirtschaftliche Maschine (10) nach Anspruch 2,
**dadurch gekennzeichnet, dass** die Lagerscheibe (44) durch beidseitig der Platte (32) angeordnete Haltescheiben (54, 56), die einen Durchmesser der Bohrung (62) radial überspannen, eingefasst ist, wobei die Lagerscheibe (44) zwischen den Haltescheiben (54, 56) eingespannt ist.

4. Landwirtschaftliche Maschine (10) nach Anspruch 3,
**dadurch gekennzeichnet, dass** an der Schlauchverbindung (34) zwischen den Verbindungsenden (36, 38) ein Absatz (48) und ein Gewinde (50) ausgebildet ist, wobei die Haltescheiben (54, 56) und die Lagerscheibe (44) zwischen einer auf dem Gewinde (50) geführten Gewindemutter (52) und dem Absatz (48) eingespannt sind.

5. Landwirtschaftliche Maschine (10) nach einem der Ansprüche 2 bis 4, **dadurch gekennzeichnet, dass** an der Platte (32) mehrere nebeneinander angeordnete Bohrungen (62) ausgebildet sind in denen jeweils eine Schlauchverbindung (34) mittels einer in der jeweiligen Bohrung (62) eingefassten Lagerscheibe (44) angeordnet ist.

## Claims

1. Agricultural machine (10) comprising a first frame part (12) and a second frame part (14) pivotably arranged about a vertical shaft (16) relative to the first frame part (12), comprising at least one first supply line (20) which extends along the first frame part (12) and at least one second supply line (22) which extends along the second frame part (14), wherein a connecting device (26) is provided, by means of which the at least first supply line and the at least second supply line (20, 22) are connected together, **characterized in that** the connecting device (26) comprises a retainer (30) on which at least one rigid pipe connection (34) is arranged for connecting the first and second supply lines (20, 22), wherein the pipe connection (34) comprises two connecting ends (36, 38) aligned axially relative to one another, between which a bearing disc (44) is clamped, wherein the bearing disc (44) is rotatably mounted in the peripheral direction thereof on the retainer (30).

2. Agricultural machine (10) according to Claim 1, **characterized in that** the retainer (30) comprises a plate (32) extending radially to the bearing disc (44) and the connecting ends (36, 38) of the pipe connection (34) in each case extend perpendicular to one side of the plate (32), wherein the bearing disc (44) is gripped with clearance in a bore (62) formed in the plate.

3. Agricultural machine (10) according to Claim 2, **characterized in that** the bearing disc (44) is gripped by retaining discs (54, 56) arranged on both sides of the plate (32), said retaining discs radially spanning a diameter of the bore (62), wherein the bearing disc (44) is clamped between the retaining discs (54, 56).

4. Agricultural machine (10) according to Claim 3, **characterized in that** a shoulder (48) and a thread (50) are formed on the pipe connection (34) between the connecting ends (36, 38), wherein the retaining discs (54, 56) and the bearing disc (44) are clamped between a threaded nut (52) guided on the thread (50) and the shoulder (48).

5. Agricultural machine (10) according to one of Claims 2 to 4, **characterized in that** a plurality of bores arranged adjacent to one another (62) are formed on the plate (32), in each case a pipe connection (34) being arranged therein by means of a bearing disc (44) gripped in the respective bore (62) .

## Revendications

1. Machine agricole (10), avec une première partie de châssis (12) et une seconde partie de châssis (14) disposée de façon pivotante autour d'un axe vertical (16) par rapport à la première partie de châssis (12), avec au moins une première conduite d'alimentation (20), qui s'étend le long de la première partie de châssis (12), et au moins une seconde conduite d'alimentation (22), qui s'étend le long de la seconde partie de châssis (14), dans laquelle il est prévu un dispositif de liaison (26), au moyen duquel ladite au moins une première et ladite au moins une seconde conduites d'alimentation (20, 22) sont reliées l'une à l'autre, **caractérisée en ce que** le dispositif de liaison (26) présente un support (30), sur lequel est agencé au moins un raccordement rigide de tuyau souple (34) pour raccorder la première et la seconde conduites d'alimentation (20, 22), dans laquelle le raccordement de tuyau souple (3) comprend deux extrémités de raccordement (36, 38) orientées axialement l'une vers l'autre, entre lesquelles est serré un disque de palier (44), dans laquelle le disque de palier (44) est monté sur le support (30) de façon rotative dans sa direction périphérique.

2. Machine agricole (10) selon la revendication 1, **caractérisée en ce que** le support (30) comprend une plaque (32) s'étendant radialement par rapport au disque de palier (44) et les extrémités de raccordement (36, 38) du raccordement de tuyau souple (34) s'étendent chacune perpendiculairement à un côté de la plaque (32), dans laquelle le disque de palier (44) est serti avec du jeu dans un trou (62) percé dans la plaque.

3. Machine agricole (10) selon la revendication 2, **caractérisée en ce que** le disque de palier (44) est serti au moyen de disques de maintien (54, 56) disposés de part et d'autre de la plaque (32), qui occupent radialement un diamètre du trou (62), dans laquelle le disque de palier (44) est serré entre les disques de maintien (54, 56).

4. Machine agricole (10) selon la revendication 3, **caractérisée en ce qu'**un épaulement (48) et un filetage (50) sont formés sur le raccordement de tuyau souple (34) entre les extrémités de raccordement (36, 38), dans laquelle les disques de maintien (54, 56) et le disque de palier (44) sont serrés entre un écrou fileté (52) mené sur le filetage (50) et l'épaulement (48).

5. Machine agricole (10) selon l'une quelconque des revendications 2 à 4, **caractérisée en ce que** plusieurs trous (62) disposés l'un à côté de l'autre sont percés sur la plaque (32), dans lesquels un raccordement de tuyau souple (34) est chaque fois disposé au moyen d'un disque de palier (44) serti dans le trou respectif (62) .
